# FASCICULE DE BREVET EUROPEEN

(11) **EP 3 549 280 B1**
(45) Date de publication et mention de la délivrance du brevet: **31.08.2022**
(21) Numéro de dépôt: 17822360.8
(22) Date de dépôt: 22.11.2017
(51) Int. Cl.: H04B 10/114

(54) **DISPOSITIF DE COMMUNICATION ADAPTÉ POUR DES HABITACLES, NOTAMMENT DE VÉHICULES AUTOMOBILES**
KOMMUNIKATIONSVORRICHTUNG FÜR EINEN FAHRGASTRAUM, INSBESONDERE IN EINEM KRAFTFAHRZEUG
COMMUNICATION DEVICE ADAPTED FOR A PASSENGER COMPARTMENT, IN PARTICULAR IN A MOTOR VEHICLE

(30) Priorité: 05.12.2016 FR 1661950
(43) Date de publication de la demande: 09.10.2019
(73) Titulaire: Orange, 92130 Issy-les-Moulineaux (FR)
(72) Inventeur: MARCHOU, Laurent, 92326 CHÂTILLON CEDEX (FR); LEROUX, Sylvain, 92326 CHÂTILLON CEDEX (FR); PERRUFEL, Micheline, 92326 CHÂTILLON CEDEX (FR); CUTULLIC, Christophe, 92326 CHÂTILLON CEDEX (FR); DUSSAUME, Philippe, 92326 CHÂTILLON CEDEX (FR)
(86) Numéro de dépôt international: PCT/FR2017/053202
(87) Numéro de publication internationale: WO 2018/104607

(56) Documents cités:
- EP-A1- 2 768 162
- EP-A1- 2 846 482
- WO-A1-2006/032221
- WO-A1-2011/035098
- GB-A- 2 401 267

## Description

La présente invention concerne un dispositif de communication destiné à un habitacle, notamment d'un véhicule (par exemple un véhicule automobile, un train, un avion ou autre).

Une fonctionnalité d'un dispositif de ce type peut être par exemple de jouer le rôle de point d'accès vers un réseau étendu pour des terminaux présents dans l'habitacle, ou encore de jouer le rôle de passerelle entre un réseau étendu et un réseau local dans l'habitacle.

On connait des dispositifs de ce type prévus pour un habitacle automobile, capables de communiquer par transmissions radiofréquence selon la norme Wifi (telle que spécifiée par le standard IEEE 802.11) avec des terminaux compatibles WiFi présents dans l'habitacle. Ces dispositifs fournissent une fonctionnalité de type routeur WiFi, et intègrent typiquement une carte SIM et des circuits de traitement leur permettant de se connecter sur un réseau radio cellulaire (2G, 3G, 4G, 5G et évolutions), d'une part, et d'offrir, d'autre part, une connexion de type Wifi à des terminaux présents dans l'habitacle à un débit pouvant atteindre 150 Mb/seconde.

On constate cependant que certains clients ou utilisateurs potentiels de dispositifs de ce type font le choix de limiter leur utilisation, voire celui de se détourner complètement de ces dispositifs, en considérant que l'habitacle d'un véhicule peut former une cage de Faraday ayant pour effet de multiplier les ondes radiofréquences à l'intérieur de l'habitacle, ce qui peut avoir pour inconvénient notamment d'augmenter le risque d'interférences de ces ondes au sein de l'habitacle, au détriment de la qualité de service ressentie par l'utilisateur.

La présente invention vient améliorer cette situation.

Elle propose à cet effet un dispositif de communication, comprenant dans un même boîtier :
- un module de communication radiofréquence, comprenant un processeur, une mémoire couplée de manière opérationnelle au processeur, et un émetteur/récepteur pour la transmission et la réception de signaux radiofréquence, dans lequel le processeur est configuré pour générer un signal numérique à partir de signaux radiofréquence reçus par l'intermédiaire de l'émetteur/récepteur,
- un module d'interface couplé de manière opérationnelle au module de communication radiofréquence pour :
   ^{∗} recevoir le signal numérique généré par le module de communication radiofréquence, et configuré pour
   ^{∗} moduler, en fonction du signal numérique, un signal électrique destiné à alimenter au moins une lampe, en vue de produire une modulation de lumière émise par la lampe en fonction du signal numérique reçu du module de communication radiofréquence,
- un photorécepteur relié au module d'interface pour recevoir un signal lumineux modulé et transmettre via le module de communication radiofréquence un signal radiofréquence correspondant au signal lumineux modulé reçu, et
- au moins une lampe connectée au module d'interface.

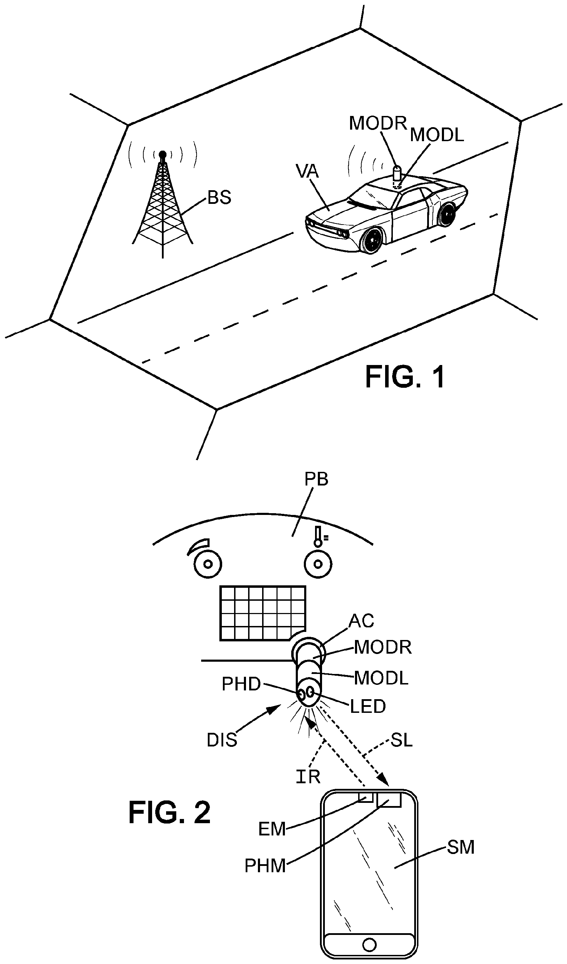

Ainsi, le dispositif proposé est autonome et comprend alors les éléments nécessaires à une transmission dans l'habitacle des données que reçoit le module de communication radiofréquence. La figure 2 montre un de ces modes de réalisation.

Le dispositif proposé présente de nombreux avantages, dont celui d'offrir un service permettant une communication sans fil dans un habitacle de véhicule, sans utiliser les ondes radiofréquences (par exemple celles de type Wifi).

Ainsi, un signal initialement reçu par le module de communication radiofréquence est finalement émis, par exemple dans un habitacle, sous la forme d'un signal lumineux (modulé), ne présentant pas les inconvénients des signaux radiofréquences mentionnés ci-dessus.

Le phénomène de cage de Faraday ne se rencontre pas avec des signaux lumineux émis à l'intérieur d'un habitacle, en particulier de véhicule automobile, et les éventuelles interférences qui pouvaient en résulter avec des ondes radiofréquences ne viennent pas affecter la qualité de réception des signaux lumineux.

En outre, l'invention offre une voie de retour possible des terminaux présents dans un habitacle (par exemple pour des smartphones équipés d'un moyen d'émission infrarouge de données), ce qui permet donc d'assurer une communication bidirectionnelle (dans le sens descendant, c'est-à-dire du dispositif vers un terminal utilisateur, et/ou dans le sens montant, c'est-à-dire depuis un terminal utilisateur vers le dispositif) via le dispositif de l'invention.

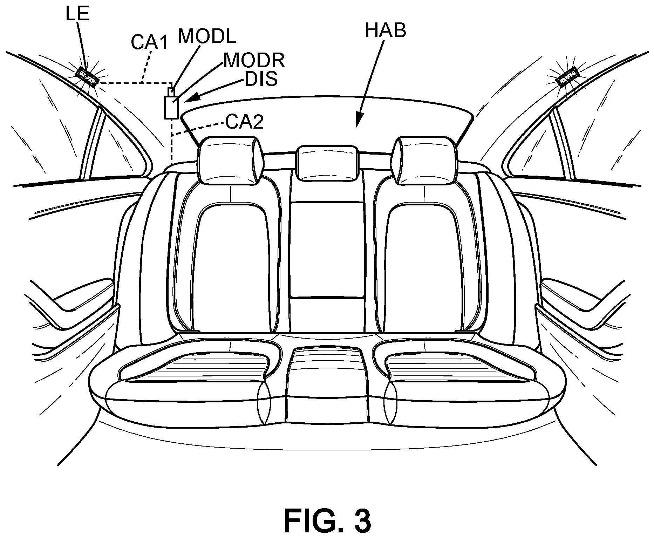

Dans une variante, le module d'interface du dispositif proposé est destiné à être connecté à une ou plusieurs lampes déjà présentes dans l'habitacle, comme décrit en détails plus loin en référence à la figure 3. Ainsi, dans cette réalisation où le dispositif proposé est destiné à une mise en œuvre dans un habitacle comportant au moins une lampe, le dispositif comprend une connexion électrique pour relier le module d'interface à cette ou ces lampe(s) de l'habitacle.

Typiquement, la modulation de lumière précitée peut être conforme au protocole de communication Li-fi, par exemple le protocole IEEE 802.15 dit « WPAN »TM (pour « Wireless Personal Area Networks ») spécifié par l'Institut des ingénieurs électriciens et électroniciens (IEEE), concernant le projet « Visible Light Communication ».

Dans une réalisation, le dispositif proposé comprend en outre un organe de connexion électrique destiné à être connecté à une prise d'alimentation électrique. Il peut s'agir avantageusement d'un organe destiné à être connecté à une prise d'allume-cigare d'un habitacle de véhicule automobile. Dans ce cas, l'alimentation fournie (par exemple de 12 volts en continu via la prise d'allume-cigare) est compatible avec les procédés de communication habituels par Li-fi à l'aide de diodes électroluminescentes typiquement.

Dans un ou plusieurs modes de réalisation, le module d'interface peut être configuré pour délivrer un signal par courants porteurs en ligne, destiné à alimenter ainsi une ou plusieurs lampes.

Dans un ou plusieurs modes de réalisation, le dispositif proposé peut comprendre un régulateur de courant d'alimentation du module d'interface. Une telle réalisation permet de stabiliser le courant que délivre le module d'interface (en particulier la valeur maximale du courant délivré, sans modulation).

La présente invention vise aussi un procédé d'installation d'un dispositif tel que proposé dans les présentes selon les différents modes de réalisation envisagés dans un habitacle comportant une ou plusieurs lampes, le procédé comprenant :
- connecter le module d'interface à une source d'alimentation électrique de l'habitacle, régulée en courant,
- connecter une sortie du module d'interface à un ou plusieurs câbles d'alimentation d'une ou plusieurs lampes de l'habitacle.

Ainsi, dans cette réalisation, le dispositif peut avantageusement utiliser au moins une lampe préexistante de l'habitacle pour transmettre le signal lumineux modulé. Comme indiqué précédemment, il peut être avantageux d'utiliser directement la source d'alimentation des lampes de l'habitacle, régulée en courant habituellement dans les habitacles de véhicules automobiles notamment. Néanmoins en variante, il peut être prévu que le dispositif intègre lui-même un régulateur de courant. Le document EP 2 768 162 Al décrit un système de divertissement et de communication dans un aéronef comportant un concentrateur avec un codeur/décodeur optique, une dorsale de réseau, des points d'accès Li-Fi répartis dans la cabine de l'aéronef pour communiquer avec les dispositifs des passagers et chacun d'eux comportant un photorécepteur et une lampe.

D'autres avantages et caractéristiques de l'invention apparaîtront à la lecture de la description ci-après d'exemples de réalisation de l'invention, et à l'examen des dessins annexés sur lesquels :
- la figure 1 illustre un exemple d'application d'un dispositif au sens de l'invention, à un habitacle de véhicule automobile,
- la figure 2 illustre un exemple de réalisation du dispositif proposé, selon une forme de réalisation où le dispositif est autonome et est branché à une prise d'alimentation électrique de l'habitacle,
- la figure 3 illustre un autre exemple de réalisation du dispositif proposé, selon une forme de réalisation où le dispositif est connecté à une prise d'alimentation électrique de l'habitacle et en outre à une ou plusieurs lampes de l'habitacle,
- la figure 4 illustre les étapes d'un procédé d'installation et de connexion d'un dispositif selon un ou plusieurs modes de réalisation, et
- la figure 5 illustre certains modules que comprend le dispositif proposé dans un ou plusieurs modes de réalisation, et de leurs connexions dans un exemple de réalisation. Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation
peuvent être mis en pratique sans ces détails spécifiques. Dans d'autres cas, des caractéristiques bien connues ne sont pas décrites en détail pour éviter de compliquer inutilement la description.

Dans les habitacles de certains véhicules automobiles actuellement disponibles, les sources de connexion à un réseau (sources d'accès large bande sans-fil) existantes peuvent être de différents types, décrits ci-après :
- les modules dits « e-call », réservés aux appels d'urgence et utilisant le numéro de téléphone d'urgence pour l'Union européenne (numéro 112), par exemple lorsqu'un accident est détecté par les capteurs du véhicule ;
- les équipements de type routeur WiFi présentés en introduction des présentes ; et
- les équipements de contrôle à ports OBD (pour « on board diagnostics »), intégrant une carte SIM.

Le principe des produits de type routeur Wifi est celui d'un point d'accès à des terminaux dans l'habitacle selon la technologie Wifi, couplé à un module large bande équipé d'une carte SIM. Le module large bande peut ainsi capter le réseau cellulaire environnant le véhicule. Le module large bande assure donc une connexion à Internet par exemple via le réseau cellulaire, aux terminaux se connectant à ce module large bande via l'accès Wifi.

L'invention propose un dispositif différent notamment en ce qu'il comprend un module large bande (module broadband), apte à communiquer sur un réseau radiofréquence, par exemple cellulaire, tel qu'un réseau de type GSM, UMTS, CDMA, HSPA, LTE, LTE-A, etc., et connecté à un modulateur de lumière pour une communication des données en modulation de lumière (par exemple selon la technologie connue sous l'acronyme « Li-fi », pour « Light Fidelity »), via une ou plusieurs lampes.

Les technologies de communication par modulation lumineuse, et notamment la technologie Li-fi, présentent l'avantage de permettre d'offrir, notamment à l'intérieur d'un habitacle, un service Internet sans fil qui n'utilise pas les ondes radiofréquences, et donc en particulier de limiter les inconvénients liés à l'utilisation d'ondes radiofréquence à l'intérieur d'un habitacle.

Ainsi, en référence à la figure 1 illustrant schématiquement et de manière non limitative un mode de réalisation du dispositif proposé, le dispositif de communication est embarqué dans l'habitacle d'un véhicule (ici un véhicule automobile VA) et comprend un module de communication radiofréquence MODR.

Le module MODR comprend un processeur, une mémoire couplée de manière opérationnelle au processeur, et un émetteur/récepteur pour la transmission et la réception de signaux radiofréquence. Dans un ou plusieurs modes de réalisation, le processeur pourra être configuré pour piloter les opérations et/ou fonctions des différents éléments du module MODR, et en particulier pour générer un signal numérique à partir de signaux radiofréquence reçus par l'intermédiaire de l'émetteur/récepteur.

Ce module MODR assure ainsi une fonction d'émetteur/récepteur radiofréquence, et est configuré pour être connecté à cet effet à un réseau radiofréquence tel que, dans l'exemple représenté, un réseau de radiocommunication cellulaire (GSM, UMTS, CDMA, CDMA2000, HSPA, LTE, LTE-A ou autre), ici via une station de base BS du réseau servant de point d'accès au réseau radiofréquence, pour l'émission et la réception de signaux radiofréquences. En fonction du mode de réalisation le module MODR peut en outre être muni d'un module de sécurité tel qu'un module d'identification d'abonné au réseau radiofréquence, tel qu'une carte SIM (Subscriber Identity Module), ou un module de sécurité intégré équivalent eSIM, pour la réception et l'émission de données via le réseau radiofréquence. Dans un ou plusieurs modes de réalisation, le module MODR peut être configuré pour communiquer avec des points d'accès radio selon différentes technologies de radiocommunication ou différents types de réseaux de radiocommunication, comme par exemple communiquer avec des points d'accès radio Wifi et communiquer avec des points d'accès radio d'un réseau cellulaire, et/ou d'un réseau Ad-Hoc.

L'homme du métier peut se rendre compte qu'il existe de nombreux types différents de réseaux de radiocommunication, cellulaires ou non cellulaires, et qu'en fonction du mode de réalisation, le module MODR pourra intégrer un ou plusieurs modules radiofréquences et être configuré pour l'émission et la réception de signaux radiofréquences, selon une ou plusieurs technologies, telles que TDMA, FDMA, OFDMA, CDMA, ou un ou plusieurs standards de radiocommunication, tels que GSM, EDGE, CDMA, UMTS, HSPA, LTE, LTE-A, WiFi (IEEE 802.11) et WiMAX (IEEE 802.16), ou leurs variantes ou évolutions, actuellement connus ou développés ultérieurement.

En particulier, le module de communication radiofréquence MODR, typiquement un module large bande, est couplé (de manière opérationnelle) à un module MODL afin de délivrer un signal lumineux dans l'habitacle du véhicule avec une modulation représentative des données reçues par le module radiofréquence MODR. La modulation du signal lumineux peut être appliquée selon la technologie Li-fi. Le module MODL peut jouer ainsi le rôle d'interface entre le module de communication MODR et une ou plusieurs lampes d'éclairage, jouant ainsi le rôle de modem luminaire pilotant l'éclairage de cette ou ces lampes.

Dans un exemple, on couple ainsi au module large bande MODR un module Li-fi MODL intégrant par exemple une lampe LED (diode électroluminescente) alimentée en tension ou en courant par le module MODL en tant que modulateur de lumière relié au module large bande MODR. La lampe ainsi alimentée électriquement produit un faisceau lumineux dans le domaine spectral visible, et clignote à une fréquence supérieure à la perception rétinienne humaine (pour la transmission de données binaires « 0 » ou « 1 »). En effet, le module Li-fi MODL délivre alors un signal de courant modulé, et transmet ce signal à la lampe pour que cette dernière émette un signal lumineux modulé, dont les changements d'état et de fréquence lumineuse sont si rapides que les valeurs de clignotement sont indécelables par la rétine de l'œil ou par le cerveau via le nerf optique. Ainsi, le modem luminaire fait varier l'intensité lumineuse d'une ou plusieurs lampes à très haute fréquence.

Par ailleurs, dans un ou plusieurs modes de réalisation, le dispositif proposé (intégrant les modules MODR et MODL) peut être configuré pour être utilisé pour des communications bidirectionnelles de données sans fil par modulation de lumière :
- dans le sens descendant (de la lampe vers un terminal recevant le signal lumineux), et
- dans le sens montant comme présenté ci-après.

Dans ce dernier cas, le dispositif proposé peut être équipé d'un module photorécepteur pour recevoir par exemple un signal infrarouge issu d'un terminal dans l'habitacle pour remonter des données (par exemple une requête d'accès à un contenu ou à un site Internet, ou autre).

Néanmoins, en variante de cette réalisation et dans un mode où seules les données descendantes sont transmises par communications Li-fi, il est possible déjà de transmettre un contenu unique, par exemple des informations de trafic et de sécurité routière, ou autres. En variante de cette dernière réalisation, il peut être prévu encore de formuler des requêtes de contenu via le réseau cellulaire sur un terminal en utilisant une application du terminal en vue de recevoir un contenu par communication Li-fi. Ainsi, en renseignant dans l'application du terminal un identifiant du dispositif de communication proposé et un identifiant de connexion Li-fi propre au terminal, le dispositif peut recevoir les données du contenu demandé via le réseau cellulaire et transmettre ces données par communication Li-fi. Plus particulièrement, ces données sont transmises par communication Li-fi avec l'identifiant du terminal ayant requis ces données, et de sorte que seul le terminal dont l'application reconnait cet identifiant puisse retenir les données reçues pour les utiliser.

On a représenté à titre d'exemple sur la figure 2 un mode de réalisation du dispositif proposé, ici configuré pour la communication bidirectionnelle des données avec un terminal tel qu'un smartphone SM. Ce terminal SM est équipé d'un photorécepteur PHM pour recevoir les données Li-fi (signal lumineux SL) et d'un émetteur infrarouge EM pour remonter des données (IR) au dispositif DIS.

Le dispositif DIS peut comprendre quant à lui le module de communication radiofréquence MODR, couplé (de manière opérationnelle) au module pour une émission de lumière modulée Li-fi MODL relié à une ampoule (référence LED de la figure 2), ainsi qu'un récepteur infrarouge PHD pour la réception des données (IR) remontantes du terminal SM.

Dans l'exemple illustré sur la figure 2, le dispositif DIS est alimenté électriquement par une connexion à un organe de fourniture d'énergie électrique aménagé dans l'habitacle du véhicule, tel que par exemple la prise d'alimentation électrique de l'allume-cigare AC disposée habituellement dans ou à proximité d'une planche de bord PB de l'habitacle d'un véhicule automobile. Dans cette réalisation, le dispositif DIS peut comprendre à cet effet une fiche de connexion (mâle) appropriée et compatible avec une prise de connexion électrique (femelle) d'un allume-cigare, cette prise étant habituellement standard dans les véhicules automobiles.

On se réfère maintenant à la figure 3 pour décrire un mode de réalisation dans lequel une ou plusieurs lampes LE de l'habitacle HAB (préexistantes) sont utilisées pour émettre les données Li-fi par couplage opérationnel avec le module de modulation de lumière MODL du dispositif proposé. On peut prévoir une longueur de câble CA1 appropriée pour la connexion de la (ou des) lampe(s) réalisant, dans le mode de réalisation illustré, le couplage opérationnel avec le dispositif DIS, lequel peut être placé dans un endroit approprié de l'habitacle HAB et y être connecté à une source d'alimentation électrique (allume-cigare ou autre). Comme dans la réalisation de la figure 2, le module MODL reçoit du module radiofréquence MODR un signal comportant les données de communication reçues du réseau radiofréquence et convertit ce signal en un signal électrique (intensité ou tension) alimentant la ou les lampes LED, ce signal électrique étant alors d'amplitude modulée en fonction de ces données reçues (typiquement selon la technologie Li-fi).

Les véhicules automobiles actuels sont souvent équipés de lampes à diodes électroluminescentes (notées « Del » ci-après). Ces lampes assurent notamment un éclairage de l'habitacle et peuvent être pilotées typiquement selon des conditions d'allumage/d'extinction. La solution proposée permet d'offrir des communications sans fil via de telles lampes Del (par exemple de 5 Watts, type « w5w ») réparties dans l'habitacle d'un véhicule. Ces lampes sont associées au module MODL pour transformer les signaux électriques qu'elles reçoivent en signaux lumineux, avec la modulation de l'amplitude d'éclairement pilotée par le module MODL.

On trouve en effet deux types de lampes dans un véhicule automobile:
- celles pour l'allumage externe, et
- celles Del (en anglais « Light-Emitting Diode », ou LED) pour l'éclairage interne (type w5w).

Les deux circuits électriques respectivement correspondants à ces deux types de lampes sont indépendants. Le circuit électrique d'éclairage interne raccorde tout circuit secondaire ou toute connectique de l'habitacle du véhicule. En particulier, la prise d'allume-cigare est connectée au même circuit électrique que celui de l'éclairage intérieur du véhicule (pour la très grande majorité des constructeurs automobiles et des modèles d'automobiles).

Ainsi, les lampes peuvent être connectées au réseau électrique par une technique similaire à celle du courant porteur en ligne avec une liaison au module radiofréquence MODR, ce dernier étant connecté par exemple à la prise électrique d'allume-cigare (ou ailleurs dans le circuit de distribution électrique interne à l'habitacle). Le module MODR peut ainsi être connecté au réseau électrique de l'éclairage interne de l'habitacle du véhicule et commander l'éclairage des lampes LED, par couplage opérationnel avec le module MODL.

Dans un véhicule automobile, un bloc d'alimentation du circuit d'éclairage interne génère un courant régulé qui peut être fourni en entrée du modem luminaire MODL. Ce module MODL, en fonction du signal reçu du module radiofréquence MODR, délivre le signal électrique (binaire) d'alimentation de la lampe LED, qui produit alors un signal lumineux modulé.

Le dispositif tel que représenté sur la figure 2 est « unitaire » dans le sens où tous ses composants sont réunis dans un même boîtier, comme illustré sur la figure 2. Néanmoins, en variante d'une connexion d'un tel dispositif unitaire à la prise d'allume-cigare, le dispositif peut comprendre des composants distribués dans le véhicule comme illustré sur la figure 3, en prévoyant par exemple un câble de connexion CA2 propre aux modules MODR et MODL du dispositif, et des câbles appropriés CA1 pour les différentes lampes à connecter. Les modules MODR et MODL peuvent ainsi être connectés aussi au circuit électrique de l'éclairage interne du véhicule.

La tension du courant électrique circulant dans ce circuit électrique interne de l'habitacle est classiquement de 12 volts, ce qui assure un bon usage de la technologie Li-fi car les modems luminaires habituels Li-fi (correspondant par exemple au module MODL) fonctionnent idéalement avec une alimentation minimale de 12 volts. Par ailleurs, il convient de noter que de nouvelles lampes de type Del intègrent directement un modem luminaire et en particulier un port pour une connexion et une réception de données par courants porteurs en ligne (CPL). Ainsi, il est possible de connecter une lampe de ce type au module radiofréquence MODR délivrant un signal directement exploitable par cette lampe.

Néanmoins, il peut être avantageux aussi pour des raisons économiques de disposer un unique modem luminaire central MODL distribuant un même signal électrique vers une ou plusieurs lampes de l'habitacle (ou encore en variante de prévoir un modem MODL capable de répartir des signaux différents en fonction des lampes pour adresser respectivement ces lampes avec des signaux spécifiques à chacune, par exemple en fonction de la proximité d'un terminal susceptible de recevoir ces données).

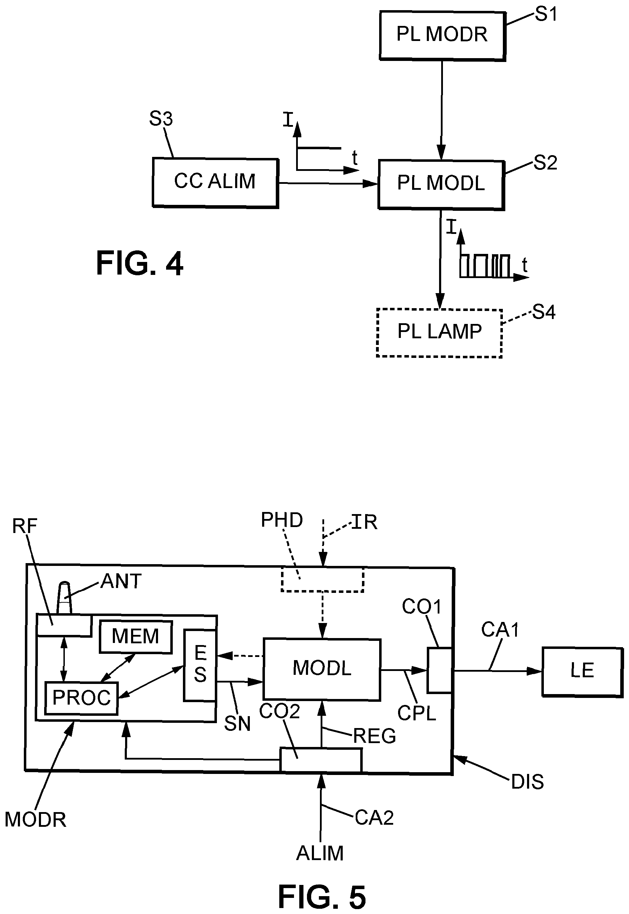

La figure 4 illustre un procédé d'installation (par exemple réalisé par un constructeur automobile) et de connexion d'un dispositif selon un ou plusieurs des modes de réalisations proposés à au moins une lampe de l'habitacle du véhicule. Le procédé proposé peut comprendre la connexion (S1) du module de communication radiofréquence MODR à une alimentation du véhicule. Préalablement à cette connexion S1, il peut être inséré une carte SIM dans le module MODR. Le procédé proposé prévoit en outre de connecter (S2) le module d'interface MODL au circuit d'éclairage de l'habitacle du véhicule, lequel est habituellement régulé en courant (S3). Cette régulation permet de délivrer habituellement une amplitude lumineuse d'un même niveau. Ainsi, la lumière modulée par le module MODL reste fidèle au signal issu du module de communication MODR et la lumière n'est pas interprétée de façon erronée par un terminal recevant le signal lumineux (dans la mesure où le terminal est positionné de manière à recevoir le flux lumineux). Le module d'interface MODL peut être préalablement connecté au module de communication MODR (dans un dispositif unitaire compact), ou on peut prévoir en variante une connexion entre les deux modules MODR et MODL, pendant l'installation du dispositif. En outre, des lampes adaptées peuvent être installées (S4) dans l'habitacle, si nécessaire. Cette installation peut ne pas s'avérer nécessaire, par exemple dans les cas où les lampes Del déjà installées dans l'habitacle, notamment s'il s'agit d'un habitacle de véhicule automobile, sont déjà adaptées pour la mise en œuvre de ce mode de réalisation (aussi cette installation S4 est-elle illustrée par des traits pointillés sur la figure 4).

On se réfère maintenant à la figure 5 pour décrire un exemple de mise en œuvre du dispositif DIS proposé. Un tel dispositif comprend un module de communication radiofréquence MODR comprenant typiquement un module d'émission/réception radiofréquence (RF) comportant une antenne ANT et configuré pour émettre/recevoir des signaux radiofréquences, couplé de manière opérationnelle à un circuit de traitement comprenant un processeur PROC couplé de manière opérationnelle à une mémoire MEM. Le processeur PROC du module de communication radiofréquence pourra être configuré pour, notamment dans le cas de la réception d'un signal par le module d'émission/réception RF, délivrer (via l'interface ES) un signal numérique SN destiné à un module d'interface MODL couplé de manière opérationnelle au module de communication radiofréquence MODR.

Le module d'interface MODL pourra être configuré pour recevoir le signal numérique SN issu du module de communication radiofréquence MODR, et pour délivrer, aux fins de transmission par courants porteurs en ligne (CPL), un signal électrique modulé correspondant au signal SN et destiné à alimenter une ou plusieurs lampe LE de l'habitacle via la connexion C01 à un ou plusieurs câbles CA1.

En fonction du mode de réalisation, le dispositif DIS pourra comprendre en outre une connexion électrique CO2 pour recevoir une alimentation électrique depuis une source de l'habitacle (via le câble CA2 dans l'exemple de la figure 3), cette source d'alimentation étant typiquement régulée en courant. Alternativement, le dispositif proposé pourra comprendre un régulateur de courant de cette source d'alimentation. Ce régulateur de courant pourra être intégré au module d'interface MODL ou directement dans la connexion électrique CO2 afin d'alimenter à la fois le module radiofréquence MODR et le module d'interface MODL avec un courant régulé.

Dans un mode particulier de réalisation (illustré en traits pointillés sur la figure 5), le dispositif DIS pourra en outre comprendre un photorécepteur PHD (par exemple un récepteur infrarouge) pour recevoir des signaux lumineux modulés d'un ou plusieurs terminaux, générer à partir des signaux lumineux reçus des signaux électriques, et transmettre au module d'interface MODL ces signaux électriques. Le module d'interface MODL sera dans ce mode de réalisation configuré pour mettre en forme ces signaux électriques pour délivrer au module de communication radiofréquence MODR des signaux numériques remontant pour une transmission radiofréquence via cette voie remontante.

Les passagers de l'habitacle peuvent utiliser des terminaux de type ordinateurs, tablettes, smartphones équipés de lecteurs Li-fi pour avoir accès à Internet et plus généralement communiquer par les voies Li-fi/Infrarouge. Comme indiqué précédemment, la lumière visible modulée selon la technologie Li-fi peut être utilisée pour les flux descendants et la voie infrarouge utilisée pour les flux montants.

L'invention n'est pas limitée à une mise en œuvre au sein d'une automobile, et peut être mise en œuvre sur tout véhicule, qu'il s'agisse d'un moyen de transport sur terre (route ou rail), mer, ou dans l'air (notamment sur tout aéronef).

En fonction du mode de réalisation choisi, certains actes, actions, évènements ou fonctions de chacune des méthodes et procédés décrits dans le présent document peuvent être effectués ou se produire selon un ordre différent de celui dans lequel ils ont été décrits, ou peuvent être ajoutés, fusionnés ou bien ne pas être effectués ou ne pas se produire, selon les cas. En outre, dans certains modes de réalisation, certains actes, actions ou évènements sont effectués ou se produisent concurremment et non pas successivement.

Bien que décrits à travers un certain nombre d'exemples de réalisation détaillés, le dispositif de communication proposé et le procédé d'installation du dispositif proposé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Dispositif de communication (DIS), comprenant dans un même boîtier :
- un module de communication radiofréquence (MODR), comprenant un processeur, une mémoire couplée de manière opérationnelle au processeur, et un émetteur/récepteur pour la transmission et la réception de signaux radiofréquence, dans lequel le processeur est configuré pour générer un signal numérique à partir de signaux radiofréquence reçus par l'intermédiaire de l'émetteur/récepteur,
- un module d'interface (MODL) couplé de manière opérationnelle au module de communication radiofréquence (MODR) pour :
^{∗} recevoir le signal numérique généré par le module de communication radiofréquence (MODR), et configuré pour
^{∗} moduler, en fonction du signal numérique, un signal électrique destiné à alimenter au moins une lampe (LE), en vue de produire une modulation de lumière émise par la lampe (LE) en fonction du signal numérique reçu du module de communication radiofréquence (MODR),
- un photorécepteur (PHD) relié au module d'interface (MODL) pour recevoir un signal lumineux modulé (IR) et transmettre via le module de communication radiofréquence (MODR) un signal radiofréquence correspondant au signal lumineux modulé reçu, et
- au moins une lampe connectée au module d'interface (MODL).

2. Dispositif de communication (DIS) selon la revendication 1, comportant en outre un organe de connexion électrique (CO2) destiné à être connecté à une prise d'alimentation électrique (AC).

3. Dispositif de communication (DIS) selon la revendication 2, dans lequel l'organe de connexion électrique est destiné à être connecté à une prise d'allume-cigare (AC) d'un habitacle (HAB) de véhicule automobile.

4. Dispositif de communication (DIS) selon l'une des revendications précédentes, destiné à une mise en œuvre dans un habitacle comportant au moins une lampe, et comportant une connexion électrique (CO1) pour relier le module d'interface (MODL) à ladite au moins une lampe de l'habitacle.

5. Dispositif de communication (DIS) selon l'une des revendications précédentes, dans lequel le module d'interface est configuré pour délivrer un signal par courants porteurs en ligne (CPL).

6. Dispositif de communication (DIS) selon l'une des revendications précédentes, comportant un régulateur de courant d'alimentation (CO2) au moins du module d'interface (MODL).

7. Dispositif de communication (DIS) selon l'une des revendications précédentes, dans lequel ladite modulation de lumière est conforme au protocole Li-fi.

8. Procédé d'installation d'un dispositif de communication (DIS) selon l'une des revendications précédentes, dans un habitacle comportant au moins une lampe, le procédé comprenant :
- connecter le module d'interface (S2, S3) à une source d'alimentation électrique de l'habitacle (CO2), régulée en courant,
- connecter une sortie du module d'interface (S4) à un câble d'alimentation de ladite au moins une lampe de l'habitacle.

## Patentansprüche

1. Kommunikationsvorrichtung (DIS), die in einem gleichen Gehäuse aufweist:
- ein Funkfrequenzkommunikationsmodul (MODR), das einen Prozessor, einen operativ mit dem Prozessor gekoppelten Speicher und einen Sender/Empfänger für die Übertragung und den Empfang von Funkfrequenzsignalen enthält, wobei der Prozessor konfiguriert ist, ausgehend von mittels des Sender/Empfängers empfangenen Funkfrequenzsignalen ein digitales Signal zu erzeugen,
- ein Schnittstellenmodul (MODL), das operativ mit dem Funkfrequenzkommunikationsmodul (MODR) gekoppelt ist, um:
* das vom Funkfrequenzkommunikationsmodul (MODR) erzeugte digitale Signal zu empfangen, und konfiguriert, um
* abhängig vom digitalen Signal ein elektrisches Signal zu modulieren, das dazu bestimmt ist, mindestens eine Lampe (LE) zu speisen, um eine Modulation von von der Lampe (LE) emittiertem Licht abhängig vom vom Funkfrequenzkommunikationsmodul (MODR) empfangenen digitalen Signal zu erzeugen,
- einen mit dem Schnittstellenmodul (MODL) verbundenen Lichtempfänger (PHD), um ein moduliertes Lichtsignal (IR) zu empfangen und über das Funkfrequenzkommunikationsmodul (MODR) ein Funkfrequenzsignal entsprechend dem empfangenen modulierten Lichtsignal zu übertragen, und
- mindestens eine mit dem Schnittstellenmodul (MODL) verbundene Lampe.

2. Kommunikationsvorrichtung (DIS) nach Anspruch 1, die außerdem ein elektrisches Verbindungsorgan (CO2) aufweist, das dazu bestimmt ist, mit einer Stromversorgungsbuchse (AC) verbunden zu werden.

3. Kommunikationsvorrichtung (DIS) nach Anspruch 2, wobei das elektrische Verbindungsorgan dazu bestimmt ist, mit einer Zigarettenanzünderbuchse (AC) eines Innenraums (HAB) eines Kraftfahrzeugs verbunden zu werden.

4. Kommunikationsvorrichtung (DIS) nach einem der vorhergehenden Ansprüche, die für eine Anwendung in einem Innenraum bestimmt ist, der mindestens eine Lampe aufweist, und eine elektrische Verbindung (CO1) aufweist, um das Schnittstellenmodul (MODL) mit der mindestens einen Lampe des Innenraums zu verbinden.

5. Kommunikationsvorrichtung (DIS) nach einem der vorhergehenden Ansprüche, wobei das Schnittstellenmodul konfiguriert ist, ein Powerline-Signal (CPL) zu liefern.

6. Kommunikationsvorrichtung (DIS) nach einem der vorhergehenden Ansprüche, die einen Speisestromregler (CO2) mindestens des Schnittstellenmoduls (MODL) aufweist.

7. Kommunikationsvorrichtung (DIS) nach einem der vorhergehenden Ansprüche, wobei die Lichtmodulation dem Li-Fi-Protokoll entspricht.

8. Verfahren zum Einbau einer Kommunikationsvorrichtung (DIS) nach einem der vorhergehenden Ansprüche in einen mindestens eine Lampe aufweisenden Innenraum, wobei das Verfahren enthält:
- Verbinden des Schnittstellenmoduls (S2, S3) mit einem stromregulierten Stromversorgungsgerät des Innenraums (CO2),
- Verbinden eines Ausgangs des Schnittstellenmoduls (S4) mit einem Speisekabel der mindestens einen Lampe des Innenraums.

## Claims

1. Communication device (DIS), comprising, in one and the same housing:
- a radiofrequency communication module (MODR), comprising a processor, a memory operationally coupled to the processor, and a transceiver for transmitting and receiving radiofrequency signals, wherein the processor is configured so as to generate a digital signal from radiofrequency signals received by way of the transceiver,
- an interface module (MODL) operationally coupled to the radiofrequency communication module (MODR) so as to:
* receive the digital signal generated by the radiofrequency communication module (MODR), and configured so as to
* modulate, on the basis of the digital signal, an electrical signal intended to supply power to at least one lamp (LE), for the purpose of producing a modulation of light emitted by the lamp (LE) on the basis of the digital signal received from the radiofrequency communication module (MODR)
- a photoreceptor (PHD) linked to the interface module (MODL) so as to receive a modulated light signal (IR) and transmit, via the radiofrequency communication module (MODR), a radiofrequency signal corresponding to the received modulated light signal, and
- at least one lamp connected to the interface module (MODL).

2. Communication device (DIS) according to Claim 1, furthermore including an electrical connection unit (CO2) intended to be connected to an electric power outlet (AC) .

3. Communication device (DIS) according to Claim 2, wherein the electrical connection unit is intended to be connected to a cigarette-lighter outlet (AC) of a motor vehicle passenger compartment (HAB).

4. Communication device (DIS) according to one of the preceding claims, intended to be implemented in a passenger compartment including at least one lamp, and including an electrical connection (CO1) in order to link the interface module (MODL) to said at least one lamp of the passenger compartment.

5. Communication device (DIS) according to one of the preceding claims, wherein the interface module is configured so as to deliver a signal through power line communication (CPL).

6. Communication device (DIS) according to one of the preceding claims, including a current controller for controlling the supply current (CO2) at least to the interface module (MODL).

7. Communication device (DIS) according to one of the preceding claims, wherein said light modulation is in accordance with the Li-Fi protocol.

8. Method for installing a communication device (DIS) according to one of the preceding claims, in a passenger compartment including at least one lamp, the method comprising:
- connecting the interface module (S2, S3) to a current-controlled electric power source of the passenger compartment (CO2),
- connecting an output of the interface module (S4) to a power supply cable of said at least one lamp of the passenger compartment.
